# EUROPÄISCHE PATENTSCHRIFT

(11) **EP 1 129 455 B1**
(45) Veröffentlichungstag und Bekanntmachung des Hinweises auf die Patenterteilung: **31.05.2006**
(21) Anmeldenummer: 99955939.6
(22) Anmeldetag: 02.11.1999
(51) Int. Cl.: G21C 15/02

(54) **REAKTORDRUCKBEHÄLTER UND VERFAHREN ZUM TEMPERATURAUSGLEICH IN EINEM REAKTORDRUCKBEHÄLTER**
REACTOR PRESSURE VESSEL AND METHOD FOR TEMPERATURE EQUALIZATION IN A REACTOR PRESSURE VESSEL
CAISSON RESISTANT DE REACTEUR ET PROCEDE D'EQUILIBRAGE DE TEMPERATURE DANS LEDIT CAISSON

(30) Priorität: 13.11.1998 DE 19852567
(43) Veröffentlichungstag der Anmeldung: 05.09.2001
(73) Patentinhaber: Framatome ANP GmbH, 91058 Erlangen (DE)
(72) Erfinder: HARTMANN, Heinz-Werner, D-91054 Buckenhof (DE); MODEL, Jürgen, D-91056 Erlangen (DE)
(74) Vertreter: Tergau & Pohl Patentanwälte
(86) Internationale Anmeldenummer: PCT/EP1999/008350
(87) Internationale Veröffentlichungsnummer: WO 2000/030120

(56) Entgegenhaltungen:
- DE-A- 19 607 693
- US-A- 4 164 443
- US-A- 4 557 891
- US-A- 4 786 461
- US-A- 4 788 032

## Beschreibung

Reaktordruckbehälter und Verfahren zum Temperatureausgleich in einem Reaktordrubehälter

Die Erfindung betrifft einen Reaktordruckbehälter mit einer oberen Stützplatte, die seinen Querschnitt oberhalb der oberen Anschlussstutzen einnimmt und einen oberen Deckelraum von einem unteren Raum abgrenzt, wobei in der Stützplatte Öffnungen zur Aufnahme von Steuerstäben und mindestens eine Ausgleichsöffnung (Deckelbypass) vorhanden sind.

Die Erfindung betrifft auch ein Verfahren zum Temperaturausgleich zwischen einem oberen Deckelraum oberhalb und einem unteren Raum unterhalb einer Stützplatte in einem Reaktordruckbehälter einer Reaktoranlage, wobei die Stützplatte den Querschnitt des Reaktordruckbehälters oberhalb der oberen Anschlussstutzen einnimmt, und ein Medium durch eine Ausgleichsöffnung in der Gitterplatte strömt.

In einem Kernkraftwerk mit Druckwasserreaktor ist in der Regel im Reaktordruckbehälter oberhalb der oberen Anschlussstutzen des Primärkreislaufes eine obere Stützplatte angeordnet, die dort den Querschnitt des Reaktordruckbehälters einnimmt. Sie unterteilt den Reaktordruckbehälter in einen größeren unteren Raum und einen kleineren dem Druckbehälterdeckel zugewandten oberen Deckelraum und dient dazu Steuerstäbe in ihrer Position zu halten.

Es existieren mindestens zwei unterschiedliche Konstruktionsvarianten. Die erste Variante wird überwiegend in Deutschland verwendet. Sie sieht vor, dass die obere Stützplatte als Gitterplatte ausgebildet ist. In einer solchen Gitterplatte sind die Öffnungen für die Steuerstäbe jeweils deutlich größer als der Querschnitt eines Steuerstabes. Es verbleibt also bei jeder Öffnung ein relativ großer freier Querschnitt, der den Steuerstab umgibt. Durch diesen freien Querschnitt hindurch ist ein Mediumaustausch (Kühlmittelaustausch) zwischen dem oberen Deckelraum und dem unteren Raum im Reaktordruckbehälter möglich. Trotzdem existiert eine zusätzliche Öffnung (Deckelbypass)im Randbereich der oberen Gitterplatte. Diese Konstruktion wird mit "hot dome" bezeichnet.

Die zweite Variante für die Konstruktion eines Reaktordruckbehälters, die überwiegend in Frankreich und den USA verwendet wird, sieht in der Stützplatte Öffnungen zur Aufnahme von Steuerstäben vor, bei denen der Querschnitt einer Öffnung weitgehend dem Steuerstabquerschnitt entspricht. Es bleibt also kein oder nur sehr wenig Raum frei für einen Mediumaustausch (Kühlmittelaustausch) zwischen den beiden an die Stützplatte angrenzenden Räumen. Diese Variante wird mit "cold dome" bezeichnet und erfordert zur Gewährleistung eines stets ausreichenden Kühlmittelaustauschs eine relativ große Ausgleichsöffnung (Deckelbypass) im Randbereich der Stützplatte.

Während des kontinuierlichen Leistungsbetriebes eines Kernkraftwerkes ist ein kleiner Deckelbypass mit kleinem Querschnitt ausreichend. Der kleine Bypass muß nur sicherstellen können, dass eine homogene Borkonzentration im gesamten Reaktordruckbehälter sicherstellt ist. Ein zu großer Deckelbypass beim Leistungsbetrieb ist unerwünscht, da infolge dessen der Kühlmittelkreislauf im Reaktordruckbehälter nicht nur durch den Reaktorkern, sondern auch durch den oberen Deckelraum geführt würde, was zu einer Verminderung der Reaktoraustrittstemperatur des Kühlmittels und zu einer Erhöhung der notwendigen Leistung der Kühlmittelpumpe im Primärkreislauf und damit zu einem Leistungsverlust des Kraftwerkes führen würde.

Ein Reaktordruckbehälter der Ausführungsvariante "cold dome" hält das heiße Kühlmittel weitgehend vom Deckelraum fern, da die Steuerstäbe in für sie vorgesehene Öffnungen in der Stützplatte möglichst eng eingepasst sind. Es kommt aber trotzdem zum obengenannten Leistungsverlust, falls ein relativ großer Deckelbypass vorhanden ist.

Die Variante des Reaktordruckbehälters, die mit "hot dome" bezeichnet wird, hat große Öffnungen in einer Gitterplatte, von denen große Teile auch bei eingefahrenen Steuerstäben frei bleiben. Folglich ist, weil der Kühlmittelkreislauf im Reaktordruckbehälter stets auch durch den oberen Deckelraum geführt wird, im Leistungsbetrieb die Temperatur des Kühlmittels im Deckelraum weitgehend mit der Temperatur unterhalb der Stützplatte identisch.

Eine andere Situation ergibt sich beim Abschalten eines Kernkraftwerkes für eine Revision oder für einen Brennelementwechsel. Bei beiden Varianten des Reaktordruckbehälters muss dann das Kühlmittel, das sich im Reaktordruckbehälter befindet, von ungefähr 300 °C auf ca. 50 °C abgekühlt werden. Dabei wird die Abkühlungszeit des Inhalts des Deckelraumes und des Reaktor-Deckels selbst durch die Größe des Deckelbypasses bestimmt.

Bei der Variante "cold dome" würde man einen relativ großen Deckelbypass benötigen, um eine ausreichend kurze Abkühlzeit zu erzielen. Ein solcher Deckelbypass würde jedoch, wie erwähnt, einen hohen Leistungsverlust des Kraftwerkes bewirken.

Bei der Variante "hot dome" ist zwar ein Kühlmittelaustausch durch die Gitterplatte hindurch prinzipiell möglich, es ergibt sich aber beim Herunterfahren der Anlage, also beim Abkühlen über den Kühlmittelkreislauf, dass das spezifisch leichtere, heiße Kühlmittel oberhalb der Anschlussstutzen im Deckelraum verbleibt, während die Temperatur im unteren Teilraum des Reaktordruckbehälters ständig abnimmt.

Durch den beim Herunterfahren des Kernkraftwerkes sich einstellenden Temperaturunterschied zwischen dem unteren Teil des Reaktordruckbehälters und seinem Deckel kommt es zu unterschiedlichen Wärmedehnungen der beiden Teile. Das kann dazu führen, dass die Deckelschrauben in ihren Gewinden etwas schräg stehen und dadurch zunächst nicht herausgeschraubt werden können. Es ist also eine zusätzliche Abkühlzeit erforderlich, damit auch der Reaktordeckel die Temperatur des übrigen Reaktordruckbehälters annehmen kann.

Der Erfindung liegt die Aufgabe zugrunde, einen Reaktordruckbehälter anzugeben, bei dem einerseits im Leistungsbetrieb ein möglichst kleiner Verlust zu verzeichnen ist und bei dem andererseits beim Herunterfahren des Kernkraftwerkes Temperaturunterschiede zwischen dem unteren Teil des Rekatordruckbehälters und dem Reaktordeckel nicht auftreten oder schnell ausgeglichen werden.

Der Erfindung liegt auch die Aufgabe zugrunde, ein geeignetes Verfahren zum Temperaturausgleich zwischen einem oberen Deckelraum und einem unteren Raum in einem Reaktordruckbehälter, die sich oberhalb bzw. unterhalb einer Stützplatte befinden, anzugeben.

Die als erste genannte Aufgabe wird gemäß der Erfindung dadurch gelöst, dass der Querschnitt der Ausgleichsöffnung (Deckelbypass) umgekehrt abhängig von der Temperatur im unteren Raum veränderlich ist.

Damit wird der Vorteil erzielt, dass im Leistungsbetrieb des Kernkraftwerkes bei kleinem Querschnitt der Ausgleichsöffnung (Deckelbypass) nur wenig Medium (Kühlmittel) in den Deckelraum gelangt, während beim Abfahren des Kernkraftwerkes bei großem Querschnitt der Ausgleichsöffnung (des Deckelbypasses) ein schneller Mediumaustausch und damit Temperaturaustausch zwischen dem Deckelraum und dem unteren Raum des Reaktordruckbehälters gegeben ist.

Vorteilhafterweise werden Leistungsverluste, die auf einen großen Deckelbypass zurückzuführen wären, klein gehalten. Man kommt folglich mit einer dementsprechend kleinen Kühlmittelpumpenleistung für den Primärkreislauf aus. Es wird nur so viel Kühlmittel zwischen den an die Stützplatte angrenzenden Räumen ausgetauscht, dass die Borkonzentration auf beiden Seiten der Stützplatte weitgehend gleich ist, was für den laufenden Betrieb sinnvoll ist.

Mit dem Reaktordruckbehälter nach der Erfindung wird beim Herunterfahren eines Kernkraftwerkes der Vorteil erzielt, dass durch den dann deutlich vergrößerten Austausch von Kühlmittel durch die Ausgleichsöffnung (Deckelbypass) hindurch der Reaktordeckel ähnlich schnell abgekühlt wird wie der übrige Reaktordruckbehälter. Das noch heiße Kühlmittel, das entweder oberhalb einer weitgehend geschlossenen Stützplatte gefangen ist oder sich bei Vorhandensein einer Gitterplatte allein durch den Auftrieb des heißeren Mediums im kälteren Medium unterhalb des Reaktordeckels gesammelt hat, wird durch den vergrößerten Querschnitt der Ausgleichsöffnung (Deckelbypass) durch kühleres Kühlmittel ersetzt. Es erfolgt also eine gleichförmigere Abkühlung des unteren Teiles des Reaktordruckbehälters und des Reaktordeckels als bisher, so dass keine zusätzlichen Abkühlzeiten erforderlich sind, um den Reaktordeckel abnehmen zu können.

Beispielsweise bildet die Ausgleichsöffnung einen Deckelbypass zwischen dem unteren Raum, der ein von der Druckbehälterwand und den Kerneinbauten begrenzter Reaktorringraum ist, und dem Deckelraum. In den als solchen bekannten Ringraum münden die Anschlussstutzen, so dass vorteilhafterweise das Kühlmittel auf einem kurzen Weg, insbesondere durch den Deckelbypass, in den Deckelraum gelangen kann. Von dort strömt es entweder an den Steuerstäben entlang oder durch die Öffnungen der Gitterplatte in den unteren Teilraum des Reaktordruckbehälters zurück. Bei der Variante "cold dome" sind die Steuerstäbe beispielsweise von Hüllrohren umgeben, in denen Platz für eine geringe Durchströmung mit Kühlmittel bleibt.

Beispielsweise ist der Querschnitt der Ausgleichsöffnung (Deckelbypass) passiv temperaturgesteuert. Damit wird der besondere Vorteil erzielt, dass ohne einen Eingriff von außen stets die für eine herrschende Temperatur geeignete Öffnung vorhanden ist.

Beispielsweise ist in der Ausgleichsöffnung (Deckelbypass) eine Vorrichtung eingebaut, die bei Temperaturerniedrigung unter Ausnutzung der Wärmekontraktion des Materials der Vorrichtung den Querschnitt der Ausgleichsöffnung vergrößert und bei Temperaturerhöhung unter Ausnutzung der Wärmedehnung des Materials der Vorrichtung den Querschnitt der Ausgleichsöffnung verkleinert. Eine solche Vorrichtung ist besonders dazu geeignet, die Ausgleichsöffnung passiv in Abhängigkeit von der Temperatur zu steuern.

Die Ausgleichsöffnung (Deckelbypass) umfasst beispielsweise eine Dehnhülse, die bei einer Temperaturerniedrigung den Strömungsquerschnitt vergrößert. Eine solche, beispielsweise aus der DE 196 07 693 A1 bekannte Dehnhülse ändert den Querschnitt einer Öffnung allein aufgrund der herrschenden Temperatur.

Beispielsweise ist die Dehnhülse mit einem in einem stirnseitig offenen Zylinder geführten, hohlen Kolben verbunden. Der Innenraum des Kolbens steht über stirnseitige Öffnungen des Kolbens sowohl mit dem unteren Raum unterhalb als auch mit dem Deckelraum oberhalb der Stützplatte in Verbindung. Außerdem weist der Kolben zusätzliche seitliche Öffnungen auf, die mit Öffnungen, die sich in der Seitenwand des Zylinders befinden, bei Schrumpfung der Dehnhülse fluchten oder diese Öffnungen überlappen. Der Querschnitt der Ausgleichsöffnung (Deckelbypass) wird vergrößert, wenn die Dehnhülse aufgrund einer Temperaturerniedrigung schrumpft.

Die Aufgabe, ein geeignetes Verfahren zum Temperaturausgleich anzugeben, wird gemäß der Erfindung dadurch gelöst, dass der Strom des Mediums umgekehrt abhängig von der Temperatur im unteren Raum verändert wird.

Damit wird der Vorteil erzielt, dass es im Leistungsbetrieb des Kernkraftwerkes aufgrund eines geringen Mediumstromes (Kühlmittelstrom) bei hoher Temperatur nicht zu einer Leistungsminderung des Kraftwerkes kommen kann. Andererseits wird, wenn beim Abfahren des Kraftwerkes ein schnelles Abkühlen des Mediums (Kühlmittels) im Deckelraum erforderlich ist, die gewünschte Temperaturerniedrigung im Deckelraum aufgrund eines hohen Mediumstromes (Kühlmittelstrom) bei relativ niedriger Temperatur in kurzer Zeit erreicht.

Beispielsweise verbindet ein Bypassstrom des Mediums durch die Ausgleichsöffnung hindurch den unteren Raum, der ein von der Druckbehälterwand und den Kerneinbauten begrenzter Reaktorringraum sein kann, mit dem Deckelraum. Auf diese Weise ist bei Bedarf eine schnelle und zuverlässige Einspeisung des Mediums (Kühlmittel) in den Deckelraum möglich. Das Medium kann den Deckelraum an den Steuerstäben entlang verlassen.

Der Mediumstrom (Kühlmittelstrom) ist beispielsweise passiv temperaturgesteuert. Dann sind keine zusätzlichen aufwendigen Vorrichtungen zur Steuerung des Stromes notwendig.

Beispielsweise wird infolge einer Temperaturerniedrigung im Reaktordruckbehälter beim Abfahren der Reaktoranlage der Mediumstrom vergrößert. Damit wird der Vorteil erzielt, dass gerade beim Abfahren des Kernkraftwerkes und einem dadurch bedingten Abkühlen des unteren Raumes des Reaktordruckbehälters ein schneller Temperaturausgleich mit dem Deckelraum im Reaktordruckbehälter gewährleistet ist.

Mit dem Reaktordruckbehälter und mit dem Verfahren nach der Erfindung wird insbesondere der Vorteil erzielt, dass der Querschnitt der einen Bypass bildenden Ausgleichsöffnung (Deckelbypass) in der oberen Stützplatte im Reaktordruckbehälter und die Stärke des Mediumstromes im Bypass stets den Erfordernissen entsprechen.

Ein Reaktordruckbehälter nach der Erfindung, in dem das Verfahren nach der Erfindung ablaufen kann, wird anhand der Zeichnung näher erläutert:
- FIG 1: zeigt einen oberen Teil eines Reaktordruckbehälters, bei dem in einer oberen Stützplatte eine Ausgleichsöffnung vorhanden ist.
- FIG 2: zeigt eine Vorrichtung, die in der Ausgleichsöffnung anzuordnen ist und einen abhängig von der Temperatur veränderlichen Querschnitt der Öffnung gewährleistet.

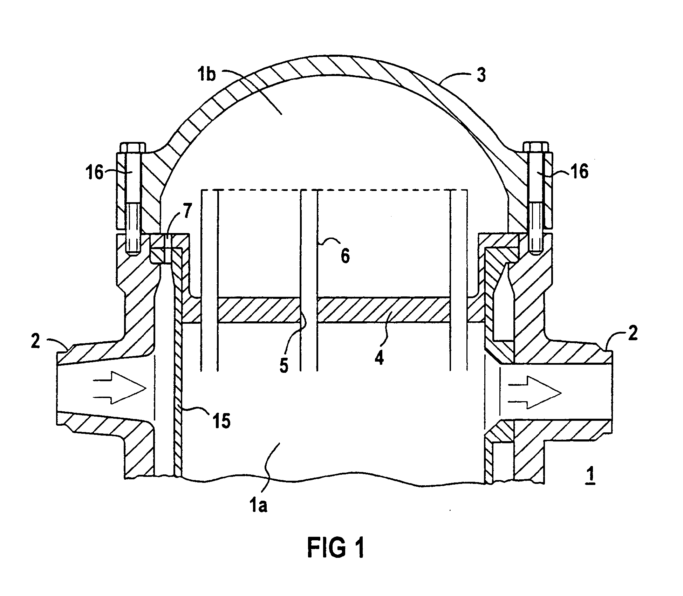

Figur 1 zeigt einen Teil eines Reaktordruckbehälters 1 mit oberen Anschlussstutzen 2 für den Primärkreis und mit einem Deckel 3. Oberhalb der oberen Anschlussstutzen 2 ist der Querschnitt des Reaktordruckbehälters 1 durch eine obere Stützplatte 4 überdeckt. Diese Stützplatte 4 weist Öffnungen 5 für Steuerstäbe 6 auf.

Bei einem Reaktordruckbehälter 1 mit "hot dome" ist eine solche Öffnung 5 größer als der Querschnitt eines Steuerstabes 6. Die Stützplatte 4 hat dann z.B. die Form einer Gitterplatte. Bei einem Reaktordruckbehälter 1 des Types "cold dome" ist eine Öffnung 5 weitgehend genauso groß wie der Querschnitt eines Steuerstabes 6.

Damit das im Reaktordruckbehälter 1 befindliche Medium (Kühlmittel) zwischen einem unteren Raum 1a unterhalb der Stützplatte 4 und einem oberen Deckelraum 1b oberhalb der Stützplatte 4 ausgetauscht werden kann, ist bei beiden Varianten in der Stützplatte 4 eine Ausgleichsöffnung (Deckelbypass) 7 vorgesehen. Diese Ausgleichsöffnung 7 ist beim "hot dome" kleiner als beim "cold dome".

Beim "cold dome" ist ein Bypass von Kühlmittel durch die Ausgleichsöffnung 7 hindurch nur in dem Umfang notwendig, dass die Borkonzentration auf beiden Seiten der Stützplatte 4 ausgeglichen wird. Im übrigen ist es erwünscht, dass im Leistungsbetrieb möglichst wenig Kühlmittel in den Deckelraum 1b gelangt, damit die Leistung des Kraftwerks möglichst hoch sein kann. Beim Abfahren des Kernkraftwerkes soll es aber nicht zu einem langsameren Abkühlen im Deckelraum 1b im Vergleich zum unteren Raum 1a kommen. Ein größerer Temperaturunterschied zwischen der oberen und der unteren Seite der Stützplatte 4 würde nämlich den Abkühlungsprozess unnötig verlangsamen und zu Problemen beim Öffnen der schematisch dargestellten Deckelschrauben 16 führen. Folglich ist beim Abfahren ein großer Kühlmittelaustausch zwischen unterem Raum 1a und Deckelraum 1b sinnvoll.

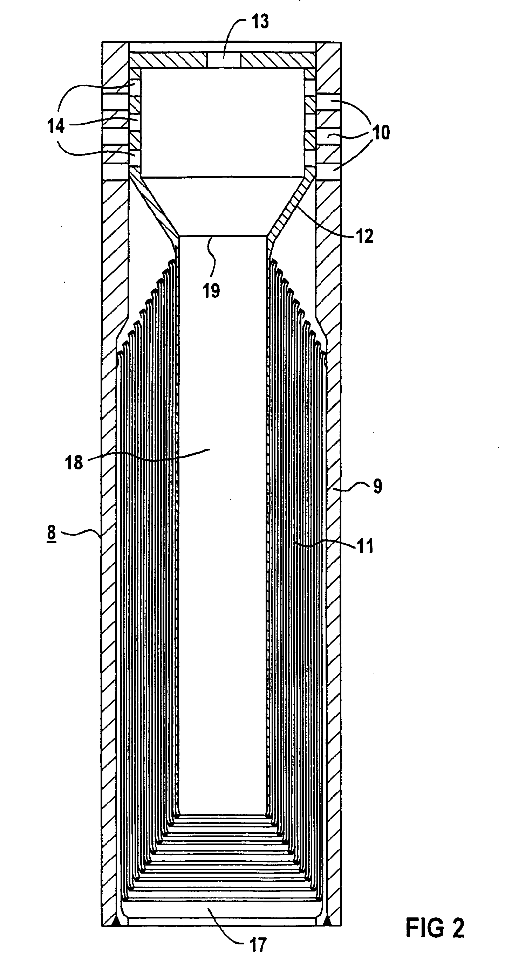

Damit die Ausgleichsöffnung 7 beim Abfahren des Kernkraftwerkes relativ groß und im Leistungsbetrieb relativ klein ist, ist in die Ausgleichsöfffnung 7 (Deckelbypass) eine in Figur 2 gezeigte Vorrichtung 8 einzubauen, die den Öffnungsquerschnitt und damit den Mediumstrom im Bypass ahbängig von der Temperatur verändert. Bei einer Temperaturerniedrigung im unteren Raum 1a bis unter die Temperatur im Deckelraum 1b, was beim Abfahren eines Kernkraftwerkes auftritt, wird der Öffnungsquerschnitt der Ausgleichsöffnung 7 vergrößert, so dass ein Temperaturausgleich mit dem noch heißeren Deckelraum 1b gewährleistet ist. Solange aber im Leistungsbetrieb die Temperatur im unteren Raum 1a höher als die Temperatur im Deckelraum 1b ist, bleibt der Querschnitt der Ausgleichsöffnung 7 relativ klein und sichert nur den Austausch von boriertem Wasser zwischen den beiden Räumen 1a und 1b. Ein Leistungsverlust infolge eines unnötig großen Deckelbypasses bzw. einer unnötig großen Ausgleichsöffnung 7 wird vermieden.

Die Vorrichtung 8 ist in Figur 2 im Detail dargestellt. Sie weist einen Zylinder 9 auf, der an beiden Stirnseiten offen ist. Im oberen Bereich sind in der Seitenwand des Zylinders 9 Öffnungen 10 angeordnet. Im unteren Bereich des Zylinders 9 befindet sich eine als solche bekannte, z.B. in der DE 196 07 693 A1 beschriebene Dehnhülse 11, die sich bei einer Temperaturerhöhung in Richtung der Achse des Zylinders 9 vergrößert. Die Dehnhülse 11 ist mit einem hohlen Kolben 12 verbunden. Im Inneren der Dehnhülse 11 befindet sich ein mit einer unteren Öffnung 17 der Vorrichtung 8 verbundener Kanal 18, der an einer unteren stirnseitigen Öffnung 19 des Kolbens 12 in das Innere des Kolbens 12 einmündet. Der Kolben 12 weist an seiner oberen Stirnseite eine obere Öffnung 13 auf, die den minimalen Öffnungsquerschnitt der Vorrichtung 8 repräsentiert. Außerdem weist der Kolben 12 zusätzliche seitliche Öffnungen 14 auf, die nur dann mit den Öffnungen 10 in der Zylinderwand fluchten oder diese überlappen, wenn die Dehnhülse 11 geschrumpft ist.

Eine Temperaturerniedrigung im unteren Raum 1a, die beim Abfahren des Kernkraftwerkes auftritt, führt zu einem Schrumpfen der Dehnhülse 11, was die seitlichen Öffnungen 14 des Kolbens 12 mit den Öffnungen 10 in der Zylinderwand des Zylinders 9 in Kontakt bringt und dadurch den Öffnungsquerschnitt der Vorrichtung 8 deutlich vergrößert.

Mit der gezeigten Vorrichtung 8 ist also ein Verfahren zum Temperaturausgleich zwischen den Räumen 1a und 1b gewährleistet, das den Strom des Mediums bzw. Kühlmittels durch die Ausgleichsöffnung 7 (Deckelbypass) abhängig von der Temperatur verändert. Es wird der Vorteil erzielt, dass beim Abfahren des Kernkraftwerkes ein großer Mediumstrom vom unteren Raum 1a in den Deckelraum 1b zum schnellen Abkühlen des Deckels 3 gewährleistet ist, während im Leistungsbetrieb nur ein dann ausreichender kleiner Strom existiert, so dass Leistungsverluste vermieden werden.

## Patentansprüche

1. Reaktordruckbehälter (1) mit einer oberen Stützplatte (4), die seinen Querschnitt oberhalb der oberen Anschlussstutzen (2) einnimmt und einen oberen Deckelraum (1b) von einem unteren Raum (1a) abgrenzt, wobei in der Stützplatte (4) Öffnungen (5) zur Aufnahme von Steuerstäben (6) und mindestens eine Ausgleichsöffnung (7) vorhanden sind,
**dadurch gekennzeichnet, dass** der Querschnitt der Ausgleichsöffnung (7) umgekehrt abhängig von der Temperatur im unteren Raum (1a) veränderlich ist.

2. Reaktordruckbehälter (1) nach Anspruch 1,
**dadurch gekennzeichnet , dass** die Ausgleichsöffnung (7) einen Bypass zwischen dem unteren Raum (1a), der ein von der Druckbehälterwand und den Kerneinbauten (15) begrenzter Reaktorringraum ist, und dem Deckelraum (1b) bildet.

3. Reaktordruckbehälter (1) nach einem der Ansprüche 1 oder 2,
**dadurch gekennzeichnet, dass** der Querschnitt der Ausgleichsöffnung (7) passiv temperaturgesteuert ist.

4. Reaktordruckbehälter (1) nach einem der Ansprüche 1 bis 3,
**dadurch gekennzeichnet , dass** in der Ausgleichsöffnung (7) eine Vorrichtung (8) eingebaut ist, die bei Temperaturerniedrigung unter Ausnutzung der Wärmekontraktion des Materials der Vorrichtung (8) den Querschnitt der Ausgleichsöffnung (7) vergrößert und bei Temperaturerhöhung unter Ausnutzung der Wärmedehnung des Materials der Vorrichtung (8) den Querschnitt der Ausgleichsöffnung (7) verkleinert.

5. Reaktordruckbehälter (1) nach Anspruch 4,
**dadurch gekennzeichnet , dass** die Vorrichtung (8) eine Dehnhülse (11) umfasst.

6. Reaktordruckbehälter (1) nach Anspruch 5,
**dadurch gekennzeichnet, dass** die Dehnhülse (11) mit einem in einem stirnseitig offenen Zylinder (9) geführten, hohlen Kolben (12) verbunden ist, dessen Innenraum über stirnseitige Öffnungen (13, 19) des Kolbens (12) sowohl mit dem unteren Raum (1a) unterhalb als auch mit dem Deckelraum (1b) oberhalb der Stützplatte (4) in Verbindung steht, und dass der Kolben (12) zusätzliche seitliche Öffnungen (14) aufweist, die mit Öffnungen (10), die sich in der Seitenwand des Zylinders (9) befinden, bei Schrumpfung der Dehnhülse (11) fluchten oder diese Öffnungen (10) überlappen.

7. Verfahren zum Temperaturausgleich zwischen einem oberen Deckelraum (1b) oberhalb und einem unteren Raum (1a) unterhalb einer Stützplatte (4) in einem Reaktordruckbehälter (1) einer Reaktoranlage, wobei die Stützplatte (4) den Querschnitt des Reaktordruckbehälters (1) oberhalb der oberen Anschlussstutzen (2) einnimmt und ein Medium durch eine Ausgleichsöffnung (7) in der Stützplatte (4) strömt,
**dadurch gekennzeichnet , dass** der Strom des Mediums umgekehrt abhängig von der Temperatur im unteren Raum (1a) verändert wird.

8. Verfahren nach Anspruch 7,
**dadurch gekennzeichnet , dass** durch die Ausgleichsöffnung (7) hindurch ein Bypassstrom des Mediums vom unteren Raum (1a), der ein Reaktorringraum ist, der von der Druckbehälterwand und den Kerneinbauten begrenzt ist, in den Deckelraum (1b) gelangt.

9. Verfahren nach einem der Ansprüche 7 oder 8,
**dadurch gekennzeichnet dass** der Strom des Mediums passiv temperaturgesteuert ist.

10. Verfahren nach einem der Ansprüche 7 bis 9,
**dadurch gekennzeichnet, dass** infolge einer Temperaturerniedrigung beim Abfahren der Reaktoranlage der Strom des Mediums vergrößert wird.

## Claims

1. Reactor pressure vessel (1) with an upper support plate (4), which occupies its cross section above the upper connecting branches (2) and divides an upper dome chamber (1b) from a lower chamber (1a), openings (5) to accommodate control rods (6) and at least one equalization opening (7) being provided in the support plate (4),
**characterized in that** the cross section of the equalization opening (7) is variable as an inverse function of the temperature in the lower chamber (1a).

2. Reactor pressure vessel (1) according to Claim 1,
**characterized in that** the equalization opening (7) forms a bypass between the lower chamber (1a), which is a reactor annulus defined by the pressure vessel wall and the core installations (15), and the dome chamber (1b).

3. Reactor pressure vessel (1) according to one of Claims 1 or 2,
**characterized in that** the cross section of the equalization opening (7) is passively temperature-controlled.

4. Reactor pressure vessel (1) according to one of Claims 1 to 3,
**characterized in that** a device (8) is fitted in the equalization opening (7), which device in the event of a temperature drop enlarges the cross section of the equalization opening (7) by utilizing the thermal contraction of the material of the device (8), and in the event of a temperature rise reduces the cross section of the equalization opening (7) by utilizing the thermal expansion of the material of the device (8).

5. Reactor pressure vessel (1) according to Claim 4,
**characterized in that** the device (8) comprises an expansion sleeve (11).

6. Reactor pressure vessel (1) according to Claim 5,
**characterized in that** the expansion sleeve (11) is connected to a hollow piston (12) guided in a cylinder (9) open at the end, the inside of which piston is connected by way of end openings (13, 19) of the piston (12) both to the lower chamber (1a) below the support plate (4) and to the dome chamber (1b) above it, and **in that** the piston (12) has additional lateral openings (14), which when the expansion sleeve (11) contracts align with openings (10) situated in the side wall of the cylinder (9), or overlap said openings (10).

7. Process for temperature equalization between an upper dome chamber (1b) above and a lower chamber (1a) below a support plate (4) in a reactor pressure vessel (1) of a reactor plant, the support plate (4) occupying the cross section of the reactor pressure vessel (1) above the upper connecting branches (2), and a medium flowing through an equalization opening (7) in the support plate (4),
**characterized in that** the flow of medium is varied as an inverse function of the temperature in the lower chamber (1a).

8. Process according to Claim 7,
**characterized in that** a bypass flow of the medium passes from the lower chamber (1a), which is a reactor annulus defined by the pressure vessel wall and the core installations, into the dome chamber (1b) through the equalization opening (7).

9. Process according to one of Claims 7 or 8,
**characterized in that** the flow of medium is passively temperature-controlled.

10. Process according to one of Claims 7 to 9,
**characterized in that** the flow of medium is increased owing to a temperature drop when running the reactor plant down.

## Revendications

1. Caisson (1) de réacteur résistant à la pression ayant un plateau (4) supérieur d'appui qui prend sa section transversale au-dessus des tubulures (2) supérieures de raccordement et qui sépare un espace (1b) supérieur de couvercle d'un espace (1a) inférieur, des ouvertures (5) de réception de barres (6) de commande et au moins une ouverture (7) de compensation étant ménagées dans le plateau (4) d'appui,
**caractérisé en ce que** la section transversale de l'ouverture (7) de compensation peut être modifiée d'une façon inverse en fonction de la température dans l'espace (1a) inférieur.

2. Caisson (1) de réacteur résistant à la pression suivant la revendication 1,
**caractérisé en ce que** l'ouverture (7) de compensation est une dérivation entre l'espace (1a) inférieur, qui est un espace annulaire de réacteur délimité par la paroi du caisson sous pression et les équipements (15) du coeur, et l'espace (1b) du couvercle.

3. Caisson (1) de réacteur résistant à la pression suivant l'une des revendications 1 ou 2,
**caractérisé en ce que** la section transversale de l'ouverture (7) de compensation est réglée passivement en fonction de la température.

4. Caisson (1) de réacteur résistant à la pression suivant l'une des revendications 1 à 3,
**caractérisé en ce qu'**il est monté dans l'ouverture (7) de compensation un dispositif (8) qui, lorsque la température s'abaisse, agrandit, en tirant parti de la contraction sous l'effet de la chaleur de la matière du dispositif (8), la section transversale de l'ouverture (7) de compensation et qui, lorsque la température s'élève, rend plus petite, en tirant parti de la dilatation sous l'effet de la chaleur du matériau du dispositif (8) la section transversale de l'ouverture (7) de compensation.

5. Caisson (1) de réacteur résistant à la pression suivant la revendication 4,
**caractérisé en ce que** le dispositif (8) comprend une douille élastique (11).

6. Caisson (1) de réacteur résistant à la pression suivant la revendication 5,
**caractérisé en ce que** la douille (11) élastique est reliée à un piston (12) creux guidé dans un cylindre (9) ouvert du côté frontal et dont l'intérieur communique par des ouvertures (13, 19) du côté frontal du piston (12) tant avec l'espace (1a) inférieur en dessous qu'avec l'espace (1b) de couvercle au-dessus du plateau (4) d'appui et **en ce que** le piston (12) a des ouvertures (14) latérales supplémentaires qui, lorsque la douille élastique (11) se rétracte, s'alignent avec des ouvertures (10) qui se trouvent dans la paroi latérale du cylindre (9) ou chevauchent ces ouvertures (10).

7. Procédé de compensation de la température entre un espace (1b) supérieur de couvercle au-dessus et un espace (1a) inférieur en dessous d'un plateau (4) d'appui dans un caisson (1) de réacteur résistant à la pression d'une installation à réacteur, le plateau (4) d'appui prenant la section transversale du caisson (1) de réacteur résistant à la pression au-dessus des tubulures (2) supérieures de raccordement, et un milieu s'écoulant par une ouverture (7) de compensation dans le plateau (4) d'appui,
**caractérisé en ce que** l'on modifie le courant du milieu inversement en fonction de la température dans l'espace (1a) inférieur.

8. Procédé suivant la revendication 7,
**caractérisé en ce qu'**un courant de dérivation du milieu de l'espace (1a) inférieur, qui est un espace annulaire de réacteur délimité par la paroi du caisson sous pression et par les équipements rapportés du coeur, parvient, en passant par l'ouverture (7) de compensation, dans l'espace (1b) de couvercle.

9. Procédé suivant l'une des revendications 7 ou 8,
**caractérisé en ce que** le courant du milieu est réglé en température de façon passive.

10. Procédé suivant l'une des revendications 7 à 9,
**caractérisé en ce qu'**à la suite d'un abaissement de la température, par arrêt de l'installation à réacteur, on rend plus grand le courant du milieu.
